# EUROPEAN PATENT APPLICATION

(11) **EP 3 839 245 A1**
(43) Date of publication of application: **23.06.2021**
(21) Application number: 19217443.1
(22) Date of filing: 18.12.2019
(51) Int. Cl.: F03B 13/18

(54) **SYSTEM FOR THE CONVERSION OF SEA, LAKE OR RIVER WAVE POWER INTO ENERGY**

(71) Applicant: Fazzini Meccanica di Menegoi Nadia C. S.N.C., 37029 San Pietro in Cariano Verona (IT)
(72) Inventor: FAZZINI, Carlo, 37029 San Pietro in Cariano Verona (IT); AYUB, Salman, 37029 San Pietro in Cariano Verona (IT)
(74) Representative: Lissandrini, Marco

(57) **Abstract**

A system (10) for the conversion of wave power energy, said system comprising one or more operating units (11), each of which is composed of a floating buoy (12) mounted on the lower part of a frame (13) whose opposite part with respect to the floating buoy is applied to a fixed support (14), said buoy (12) being able to oscillate through the thrust exerted by the wave power so as to actuate, through cables (20), at least one mechanism (16) comprising a shaft (36) equipped with actuating rollers (35), at least one flywheel (18) and a compressor (17), and wherein said flywheel (18) and compressor (17) subjected to rotational movement produce compressed air and heatable liquid intended for storage for different uses.

## Description

### FIELD OF APPLICATION

The present invention relates to a system for the conversion of wave power energy into thermal and mechanical energy, said system being implemented on coastal onshore structures and/or on offshore platforms.

The present invention proposes to solve the problem of the unstable nature wave power that can generate a limited force which, as known, can be transmitted to a single converter, and therefore envisages, according to the invention, combining multiple devices and connecting them to an energy storage system, so as to have a constant output and be able to use it when necessary.

The present invention is advantageously applied in the field of devices for the conversion of wave power into energy, in particular into thermal and mechanical energy.

### PRIOR ART

It is known that over time many and different solutions have been developed for the conversion of energy from wave power. These solutions can be classified according to their operating principle, such as the oscillating water column, or point absorber or also according to their positioning onshore or offshore.

Other types of classification can be made based on the energy conversion system, which can be pneumatic, hydraulic, mechanical and magnetic-linear. The development of the WECs (wave energy converters) must face many problems that cause an increase in costs, which can be summarised in the following points.

First of all there is the problem of the costs of installation and connection to the grid of the device, which are very high especially in the case of offshore positioning.

Moreover the offshore anchoring solutions can be very difficult, as they must be able to withstand strong storms.

As regards the connection to the electric grid, it is known that the energy obtained from wave power is of an entirely random and uncertain nature, as it oscillates and primarily depends on the weather conditions.

Consequently, the synchronisation to the grid conditions requires complex and therefore expensive devices, and furthermore their same complexity can also cause a decrease in efficiency.

As regards the aspect of maintenance, it has been found that offshore wave power generation systems require frequent and very complex maintenance, adversely affecting management costs, besides being difficult to carry out.

Another drawback encountered with the use of traditional energy conversion systems relates to the pollution of seawater, which can occur in the case of failures that can cause the output of liquid or viscous materials which are extremely dangerous for the environment.

The corrosion of the metal components necessary for the operation of the device should also be considered. These components, especially if exposed to seawater, require the use of very expensive materials and solutions.

The analysis of the conventional devices for energy recovery must also address the issue of periodic incrustation removal operations. The operation of said devices in seawater requires that, especially in the case in which the same are applied offshore, the incrustations are removed through the implementation of very expensive operations which often require stopping the system and consequently production, with all the negative consequences that follow.

As regards the protection mechanisms, it should be noted that the mechanisms immersed in seawater have numerous and difficult protection issues and can be damaged in the event of a leak in the seals.

For example traditional solutions are known, indicated in documents US2000/020020, US020102, CN102019009, which relate to systems for the conversion of wave power comprising one or more operating units each of which comprises a float mounted on the lower part of a frame, said float being associated with a mechanism comprising a shaft equipped with wheels forming part of a generator.

These solutions provide for the recovery of electrical energy alone and furthermore the shapes of the floats are of the traditional type, generally cylindrical or regardless subject to recover energy only from sussultatory motions in the vertical direction, not being able to recover all the thrusts of the waves, i.e. also those on a horizontal or oblique axis.

More generally, the traditional solutions relating to the recovery of energy from wave power are unreliable due to all of these issues, or are of limited use, or are very complex and consequently extremely expensive, both from the point of view of construction and from that of maintenance, for which in fact in many cases their use is downgraded from other forms of energy recovery.

### DESCRIPTION OF THE INVENTION

The present invention aims to provide a system for the conversion of wave power energy into thermal or mechanical energy which is capable of eliminating or at least reducing the drawbacks highlighted above.

The invention aims in particular to provide a "power-take off" or energy conversion system designed to convert the energy from wave power into thermal and mechanical energy and store it for future use.

From the point of view of advantageous objectives achieved, the design of the system according to the invention has eliminated or reduced all the problems and all the defects highlighted above relating to the known solutions and allows the production of energy with lower investments and maintenance costs.

This is achieved by means of a system for the conversion of wave power energy into thermal and mechanical energy, the features of which are described in the main claim.

The dependent claims of the present solution outline advantageous embodiments of the invention.

The main advantages of this solution relate to the fact that the energy produced by the floating buoy actuated by the wave power is converted into thermal energy and mechanical (pneumatic) energy that can easily be stored and used when needed.

The oscillatory movement of the buoy is converted into a unidirectional pulsating rotation of the drive shaft by means of a pulley and cable transmission and free wheels. At one end of the drive shaft a flywheel is mounted to standardise the rotatory movement, while at the opposite end a pneumatic compressor is mounted. The compressor converts the mechanical energy supplied from the buoy into pneumatic energy (compressed air).

The thermodynamic recovery is implemented by recovering the heat generated in the air compression phase. In fact, the mechanical energy cannot be completely converted into compressed air because the compression generates a large amount of heat; indeed, the thermal energy generated in this way is far superior to the pneumatic energy.

### ILLUSTRATION OF THE DRAWINGS

Further characteristics and advantages of the invention will become apparent from reading the following description of an embodiment of the invention provided by way of non-limiting example, with the aid of the figures illustrated in the appended tables of drawings, in which:
- figure 1 shows an axonometric view of a system for the conversion of wave power into thermal and mechanical energy according to the invention in its entirety;
- figure 2 illustrates a schematic view of one of the floating generators;

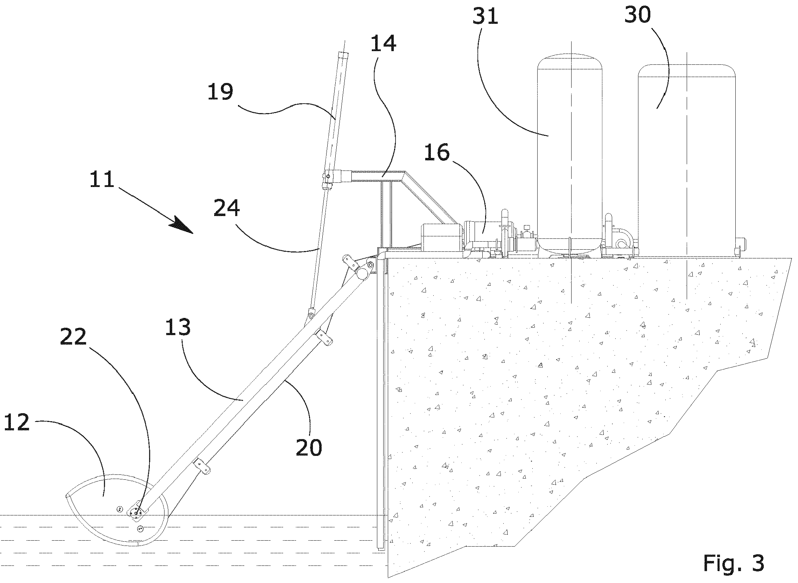

- figure 3 is a partial side sectional schematic view of the system according to the invention;

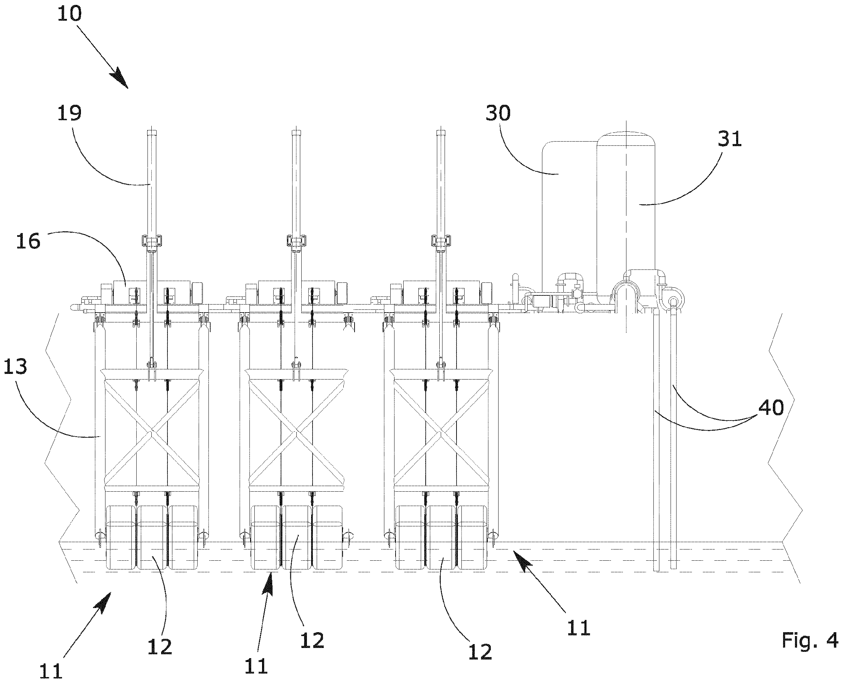

- figure 4 is a frontal prospectus view of the system;

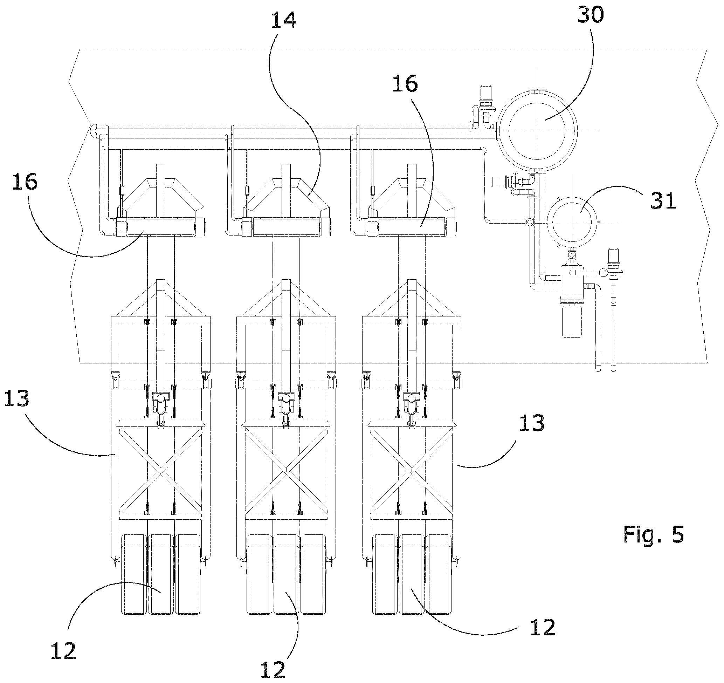

- figure 5 is a schematic plan view of the system according to the invention;
- figures 6 and 7 are detailed views of the energy recovery mechanism according to the invention.

### DESCRIPTION OF AN EMBODIMENT OF THE INVENTION

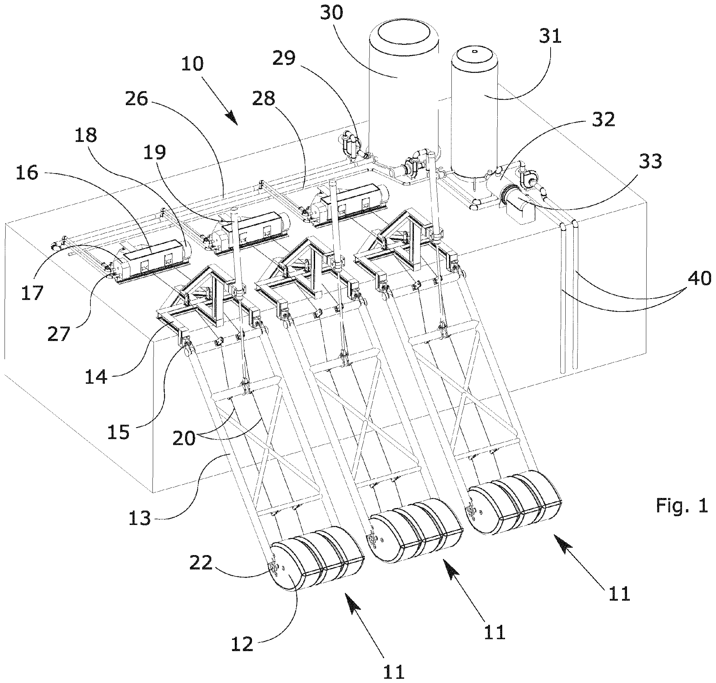

With reference to the appended figures, and initially in particular to figure 1, the number 10 generally indicates a system for the conversion of wave power energy into thermal and mechanical energy.

In the embodiment of figure 1, the system 10 according to the invention comprises one or more operating units 11, each of which is in turn composed of a floating buoy 12 mounted on the lower part of a frame 13 whose opposite part with respect to the floating buoy is hinged to a fixed support 14.

More in particular, the frame 13 is attached to the fixed frame 14 by means of pins 15 and a mechanical actuator, and supports the oscillating buoy 12 that rotates around the pin 22 at the opposite end.

The oscillating buoy 12 is able to operate, through a pulley and cable transmission, at least one mechanism 16 comprising a shaft 36 with a flywheel 18 and a compressor 17.

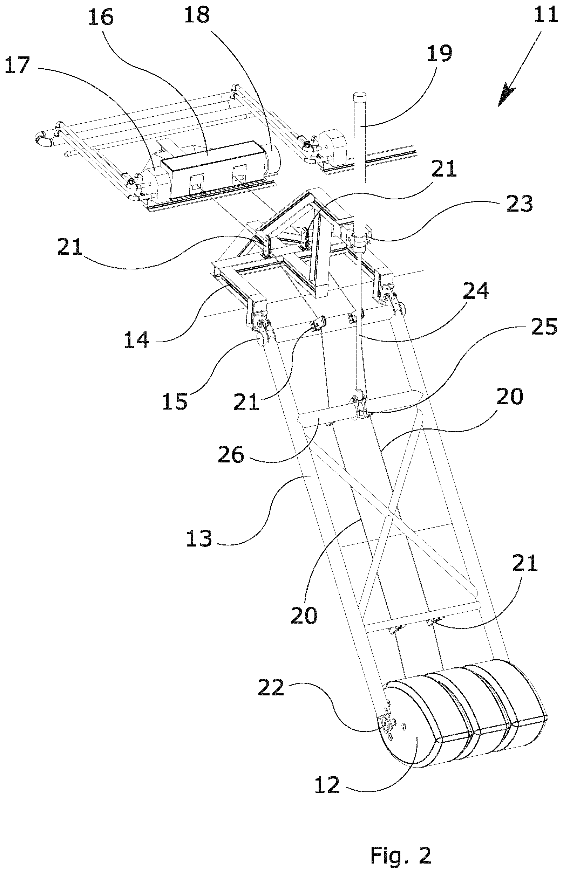

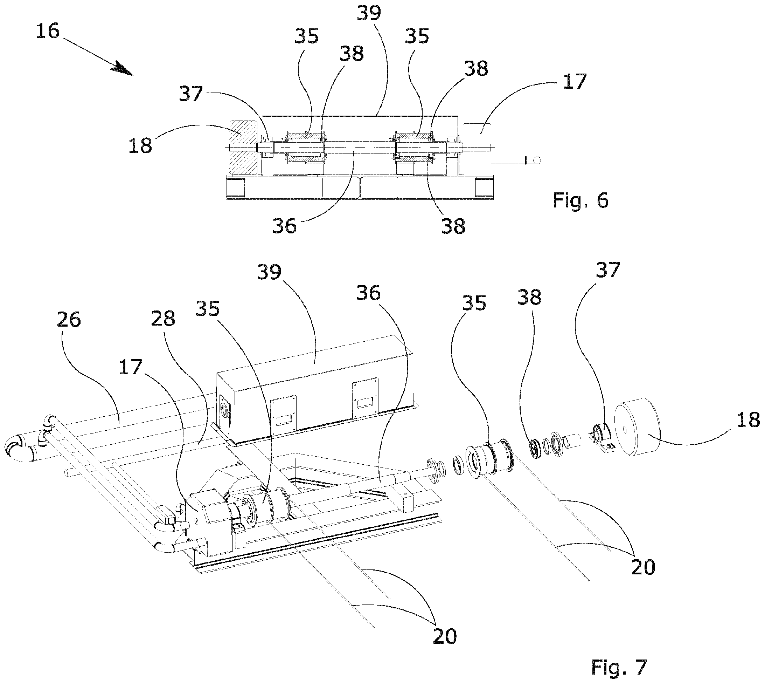

In the embodiment shown in figure 1 and in detail in figures 2, 6 and 7, which schematically show one of the operating units 11 and the mechanism 16 (figures 6 and 7), it is possible to note that the flywheel 18 and the compressor 17 are mechanically actuated by cables 20 which are fitted on the floating buoy 12, said cables being pass through suitable guides 21 arranged along their path in part along the frame and in part on the fixed support 14.

Figures 6 and 7 show in detail the components of the actuation mechanism of the compressor that are part of the mechanism 16. It can be noted that the cables 20 coming from the buoy 12 actuate a pair of rollers 35 mounted on the drive shaft 36 placed on the supports 37.

Said rollers 35 act to put the shaft 36 in rotation through the interposition of a free wheel 38 which in turn is able to put the same shaft in rotation in the positive phase of the oscillation of the buoy, while it does not transmit any motion to the shaft during the return phase of the buoy.

All the components of the mechanism 16 are fixed to the floor and arranged to the rear with respect to the fixed support 14. Furthermore, the same components are comprised within a case 39.

From an operational point of view, in the power phase the lower cables rotate the rollers in one direction. The shaft is driven in rotation by means of the free wheel 38 mounted between the rollers 35 and the shaft 36.

In the return phase the cables rotate the rollers 35 in the opposite direction, but this motion is not transmitted to the shaft 36 because the free wheel 38 does not transmit power in this direction. The flywheel 18 mounted on the shaft in the position opposite the compressor 17 provides for levelling the pulsating character of the motion.

It should be further noted that in the embodiment illustrated in figures 1 and 2, the floating buoy 12 is arranged on a pin 22 positioned horizontally on the lower end of the frame 13, and thus subject to idle rotation, and has a substantially elliptical or flattened shape in a vertical direction, such as to transmit to the cables 20 associated therewith a rotary motion for both the vertical and horizontal thrust of the waves, capturing both their kinetic and potential energy.

This causes the cables 20, which in this embodiment are anchored to the floating buoy 12, to impart maximum intensity thrusts to the flywheel 18 and the compressor 17 when the buoy rotates in one direction, while they do not transmit any motion when the buoy returns to the original position.

As shown in figure 2, the actuator 19, arranged with a substantially vertical configuration on the fixed part 14 by means of an articulated coupling element 23, comprises a stem 24 whose end is in turn coupled to an articulated anchoring element 25 applied to one of the crosspieces 25 of the frame 13.

The actuator 19 allows the safe positioning of the system in the event of a storm or maintenance, since it is able to lift the frame 13 according to needs. Moreover, the actuator allows adapting the position of the buoy to the sea level, compensating for the effect of the tides.

As mentioned previously, said floating buoy 12 has an asymmetrical design which is capable of capturing both the kinetic and potential energy of the waves, giving rise to an oscillatory and rotating movement about the axis of the pin 22 which centrally crosses the buoy itself, with an amplitude dependent upon the height of the wave.

As mentioned, the floating buoy 12 is connected to the main conversion system located on the ground, represented by said first mechanism 16, by means of closed loop cables 20 and a pulley placed inside the same first mechanism 16.

Depending on the environmental conditions of the installation site, the floating buoy 12 can be replaced by a float of suitable shape which moves in a vertical direction following the profile of the wave.

In any case the oscillatory movement of the floating buoy 12 causes the rotation in one direction of the main shaft of the pulley during the first half of the oscillation (positive rotation), and in this phase the moment originated by the buoy is completely transmitted to the shaft.

In the second half of the movement (negative rotation), the free wheel 38 comprised in the mechanism 16 allows the buoy 12 itself to return to its original position, because it is disconnected from the mechanism. The return movement is due precisely to the combination of counterweights and the asymmetrical profile of the buoy, calculated to ensure the natural appropriate frequency that maximizes the efficiency of the buoy in accordance with the incoming wavelength.

In the embodiment shown in figure 1 the system according to the invention further comprises ducts 26 containing cooling fluid connected to the compressor 17, and ducts of compressed air 28 connected to the compressor with the interposition of a non-return valve 27, at least one recirculation pump 29 and at least one thermal accumulation reservoir 30.

Furthermore the same system according to the invention, as shown in figure 1, comprises a tank of compressed air 31, a pneumatic motor 32 and an electric generator 33.

From an operational point of view the floating buoy 12, moved by the wave power, rotates around the pin 22 (fig. 2) and transfers the energy through the transmission system with cables 20 to the shaft 36 with the pulley of the mechanism 16.

Some counterweights (not shown) are mounted in the buoy to ensure the return movement of the buoy itself to its original position.

The frame can be adapted to the sea level thanks to the actuator 19 which also allows the safe positioning of the system in the event of a storm or maintenance.

The oscillatory movement of the buoy 12 is converted into a unidirectional pulsating rotation by means of the free wheel comprised inside the mechanism 16 and the flywheel 18. The compressor 17 is mounted on the opposite side of the shaft with respect to the flywheel 18.

The system is suitable to operate in thermodynamic operation in the compression phase in which the compressor 17 converts the mechanical energy into pneumatic energy. The mechanical energy cannot be completely converted into compressed air because the compression generates a large amount of heat.

The thermal energy generated in this way is far superior to the pneumatic energy.

The cooling system of the compressor is operated by means of a circuit of cooling fluid 26 and allows obtaining two positive effects:
a) the heat generated during the compression phase is recovered and stored in the thermal accumulation reservoir 30 for future use.
b) The compression efficiency is increased by cooling the air during the compression.

After this phase, the converted energy is stored in two forms and is ready for future use. The compressed air is stored in tanks 31 through the high-pressure ducts 28, while the thermal energy is stored using appropriate fluids accumulated in the thermal accumulation reservoirs 30.

When requested by the user, the compressed air is converted into electrical energy by means of the pneumatic motor 32 and the electrical generator 33.

Analogously with what occurs in the compression phase, during the expansion phase there is a drastic drop in the air temperature and the heating of the air in this phase allows the increase of the system's efficiency as well as the elimination of problems such as the formation of ice on the motor, valves and tubes. The thermal energy required for the expansion can be taken from three different sources:
a) Thermal energy obtained during the compression phase and stored in the thermal accumulation reservoir 30;
b) Thermal energy contained in the seawater and collected through conduits 40 (fig. 1). In this case, since the temperature of the water is relatively low, the concentration of energy is less than that stored in the thermal accumulation reservoir. However, the abundance of the resource present in the sea compensates for this disadvantage. In the overall energy balance, the contribution of the seawater can be considered an additional source of energy that increases the apparent overall efficiency of the system;
c) Thermal energy contained in the buildings that require conditioning. The note on the overall efficiency indicated in b) is also valid in this case.

Since the thermal energy required during the expansion phase can be obtained from seawater, it is possible to use the heat generated during the compression to heat environments adjacent to the system installation area.

It should be noted that the system according to the invention does not envisage a standard system configuration; in fact, it depends on the climatic conditions of the place where it is installed. In general, if the WEC (wave energy converter) according to the invention is installed in a location with a cold climate, the use of thermal energy generated by the compression of the air will be preferred for heating; the energy necessary for the expansion phase will be retrieved from the seawater.

If instead the WEC (wave energy converter) is installed in areas with a warm climate, the thermal energy stored will be used to heat the system during the expansion phase. If convenient, it is possible to use the negative thermal energy (frigories) that is generated in the expansion phase to condition adjacent buildings.

It is also possible to use a combination of the three situations.

According to further embodiments it is also envisaged that the means for actuating the mechanism 16 can also be different from those described and illustrated, and the cables 20 can also be placed in traction by floating devices of another nature. Any such additional floating devices are to be considered comprised in the scope of protection of the invention.

The invention has been described in the foregoing with reference to a preferential embodiment thereof. However it is clear that the invention is susceptible to numerous variants which fall within the scope thereof, and which are technically equivalent.

## Claims

1. A system (10) for the conversion of wave power energy, said system comprising one or more operating units (11), each of which is composed of a floating buoy (12) mounted on the lower part of a frame (13) whose opposite part with respect to the floating buoy is applied to a fixed support (14), said buoy (12) being able to oscillate through the thrust exerted by the wave power, wherein said floating buoy (12) is able to activate, through cables (20), at least one mechanism (16) comprising a shaft (36) equipped with actuating rollers (35), at least one flywheel (18) and a compressor (17), and wherein said flywheel (18) and compressor (17) subjected to rotational movement produce compressed air and heatable liquid intended for storage for different uses, said floating buoy (12) being arranged on a pin (22) positioned horizontally on the lower end of the frame (13), and thus subject to idle rotation and having a substantially elliptical or flattened shape in a vertical direction, such as to transmit to the cables (20) associated therewith a rotary motion for both the vertical and horizontal thrust of the waves, capturing both their kinetic and potential energy, imparting maximum intensity thrusts to the flywheel (18) and the compressor (17).

2. The system (10) according to the preceding claim, **characterised in that** the oscillatory movement of the floating buoy (12) causes the rotation in one direction of the main shaft of the pulley during the first half of the oscillation (positive rotation), and at this stage the moment originated by the buoy is completely transmitted to the shaft.

3. The system (10) according to claim 4, **characterised in that** in the second half of the movement (negative rotation), a free wheel (38) comprised in the first mechanism (16) allows the buoy itself to return to its original position, since it is disconnected from the mechanism, and **in that** the return movement is due to the combination of counterweights and the asymmetrical profile of the buoy, calculated to ensure the appropriate natural frequency that maximizes the efficiency of the buoy in accordance with the incoming wavelength.

4. The system (10) according to the preceding claims, **characterised in that** said mechanism (16) is associated with ducts (26) containing cooling fluid connected to the compressor (17).

5. The system (10) according to the preceding claims, **characterised in that** said mechanism (16) is associated with ducts of compressed air (28) connected to the same compressor (17) through the interposition of a non-return valve (27), at least one recirculation pump (29) and at least one thermal accumulation reservoir (30).

6. The system (10) according to the preceding claims, **characterised in that** it comprises a tank of compressed air (31), a pneumatic motor (32) and an electric generator (33).

7. The system (10) according to the preceding claims, **characterised in that** it comprises an actuator (19) arranged with a substantially vertical configuration on the fixed part (14) by means of an articulated coupling element (23), and **in that** said actuator (19) comprises a stem (24) whose end is in turn coupled to an articulated anchoring element (25) applied to one of the crosspieces (25) of the frame (13), adapted to the movement and adjustment of the frame (13).

8. The system (10) according to the preceding claims, **characterised in that** it comprises conduits (40) that retrieve water from the water basin for the heating of the system following the expansion of the compressed air and in this case, since the temperature of the water is relatively low, the concentration of energy is less than that stored as thermal energy.
